# EUROPEAN PATENT SPECIFICATION

(11) **EP 0 823 629 B1**
(45) Date of publication and mention of the grant of the patent: **16.07.2003**
(21) Application number: 97500131.4
(22) Date of filing: 04.08.1997
(51) Int. Cl.: G01N 21/88

(54) **Process for the automatic recognition and categorization of defects in pallets or similar elements, and corresponding system**
Verfahren und Vorrichtung zur automatischen Erkennung und Klassifizierung von Mängeln in Paletten oder ähnlichen Objekten
Procédé de localisation et de classification automatique de défauts dans des palettes ou éléments similaires, et système correspondant

(30) Priority: 05.08.1996 ES 9601745
(43) Date of publication of application: 11.02.1998
(73) Proprietor: Chep Pooling Systems BV, 2353 TL Leiderdorp (NL)
(72) Inventor: Maravall Gomez Allende, Dario, Boadilla del Monte, 28660 Madrid (ES)
(74) Representative: Elzaburu Marquez, Alberto

(56) References cited:
- EP-A- 0 460 431
- EP-A- 0 477 536
- EP-A- 0 543 629
- GB-A- 2 224 831
- US-A- 4 486 776
- US-A- 4 638 171

## Description

The present invention relates to a process for the automatic recognition and categorization of defects in pallets or similar elements, and to a system which operates using this process.

A series of devices and installations for selecting and choosing between materials and objects, applicable particularly to grading machines and to machines for detecting defects, is already known.

Thus, for example, Spanish Patent Application 503734, in the name of Joan Costa Bofill and Pere Martinez Prat, claims a device for selecting and choosing between materials and objects for grading machines. This device consists of image-receiving cameras which are connected to amplifiers, the latter being in turn connected to analog/digital converters and to synchronizing separators. The signal from the converters is sent to a processing unit which is linked to the cameras via a group of elements which delimit the surface of the object to be inspected.

Spanish Patent Application 8904094, in the name of Control Vision Computer, S.A., covers an installation for the detection and rejection of defective lids for containers which consists of a conveyor track by means of which the lids are transferred and in which at least one width-wise interruption has been made, a source of light and a video camera which face each other and are arranged one on either side of the strip, the video camera sending its signal to an artificial-vision system with means for detecting and locating the existence of a hole in a lid, ordering expulsion means to remove the lid with the hole from the conveyor track. This installation is applicable to containers for perishables.

Spanish Utility Model 9302777, in the name of Aplicaciones Ferricas, S.A., covers an artificial-vision machine for quality control in the manufacture of ceramic paving and flooring components. This machine includes a belt for conveying the components to be analysed which, by means of a positioning device, halts them, centres them and locates them with respect to a constant and uniform illumination apparatus which, via a vision apparatus, receives the variables of the component to be analysed and checks them against the corresponding variables of an electronic card of a computer which actuates actuators of the system for categorizing the components.

European Patent Application 0,460,431, in the name of Rautaruukii OY, relates to a method for the optical inspection of a band in which the aim of the method and the corresponding equipment is to detect defects in the surface of said band.

Furthermore, in 1994 the Applicant developed an initial prototype intended for the automatic categorization of a CHEP 800 × 1200 pallet by means of artificial-vision techniques.

The process and the system for the automatic recognition and categorization of defects in pallets or similar elements, which is the subject of this invention, has two general objectives, namely, firstly, to provide the technical bases for developing a complete system for automatic categorization of pallets which is capable of automatically recognizing all the defects which said pallet may contain. Secondly, it is an aim of the present invention to develop a system capable of automatically categorizing a series of defects in the said pallets, such as:
- the absence of a component;
- a broken or split component;
- a component which has been displaced from its position by more than the specified amount;
- a component which has splintered beyond set tolerances;
- a component with a significant loss of volume;
- a cracked component or one with fissures outside set tolerances;
- component dimensions outside set tolerances;
- defects in the wood: knots, stripped-bark areas, slits, etc.;
- defects in the nails.
Of these, three are of particular interest, namely:
1. A transverse break in the upper platform;
2. The detection of longitudinal fissures greater than 300 mm; and
3. The loss of more than one third of the volume in the central stud.

In order to achieve the said general objective, the authors of the invention considered the following five phases:
1. The development of an appropriate image-capturing system;
2. The setting-up and testing of extraction algorithms for edges and segmentation;
3. The design of a device for recognizing defects;
4. The development of a user environment; and
5. The validation of the system by means of the studying of a sample of defective pallets.

The subject of the present invention is therefore a process for the automatic recognition and categorization of defects in pallets comprising the steps of claim 1.

The subject of the present invention is further an apparatus comprising all features of claim 6.

According to the invention, the process is carried out on all the possible defects of each one of the elements of the pallet, a specific analysis subsequently being carried out on each defect detected in order to determine whether this is a catalogued defect.

In accordance with the invention, the analysis of the results obtained is based on a set of digitized images of the pallets, these images being stored in computer files; the detection and the analysis of the defects is carried out with dynamic error specifications to which parameters can be applied, with the aim of obtaining various quality criteria.

Lastly, in accordance with the invention, the process is characterized in that the determination of the outline of the pallet involves an operation of highlighting and enhancing the original image of this pallet and an automatic thresholding of the histogram of the highlighted image.

According to the invention, the computer specifically analyses the defects found, verifying whether a catalogued defect is involved, revealing, by means of an identifier, the defect found and indicating the condition of the element of the pallet examined. In addition, according to the invention, the computer includes a series of files with the digitized images of the pallet which is the subject of the examination.

The image-capturing system used for the viability study consists of:
- a non-interlinked set of video cameras with their respective optics;
- a Pentium PCI PC-type computer;
- a card for capturing and processing an image with a resolution of 768 x 576 pixels and 258 levels of luminous intensity on the white/black scale;
- a package of programs for processing digital images and artificial vision for the automatic categorization and measurement of the pallets.

The illumination used in the image-capturing system was of utmost importance, satisfactory results being obtained with light not incident directly on the pallet and the use of a black-background screen which enhances contrast.

The cameras used are of the standard video-signal type, supplemented with C mount optics.

The use of a powerful computer, which is necessary for this type of processing, together with optimization of the processing algorithms made it possible to achieve an acceptable response time.

The capture processing consists in the computer suitably illuminating the pallet, taking the image, digitizing it and turning the pallet over so that the various processing operations can be carried out. It is possible to store the images of the defective pallets for subsequent statistical analysis of defects and study of the causes thereof.

The next step is to find the outline of the pallet in order to be able to identify it, obtain its measurements and pinpoint the defects. This is a critical step in obtaining a satisfactory result in the next stage of identifying the defects. In addition, this processing has to be very rapid, and therefore a compromise was sought between the quality of the edges obtained and the calculation time employed.

After a number of tests using various methods of obtaining edges, the process consists in:
a. an operation of highlighting and enhancing the contrast of the original image of the pallet;
b. the automatic thresholding of the histogram of the image highlighted.

A description will now be given of the subject of this invention, with the aid of the drawings, although it must be understood that these represent no more than a preferred embodiment of the invention which must in no way be regarded as limiting its scope.

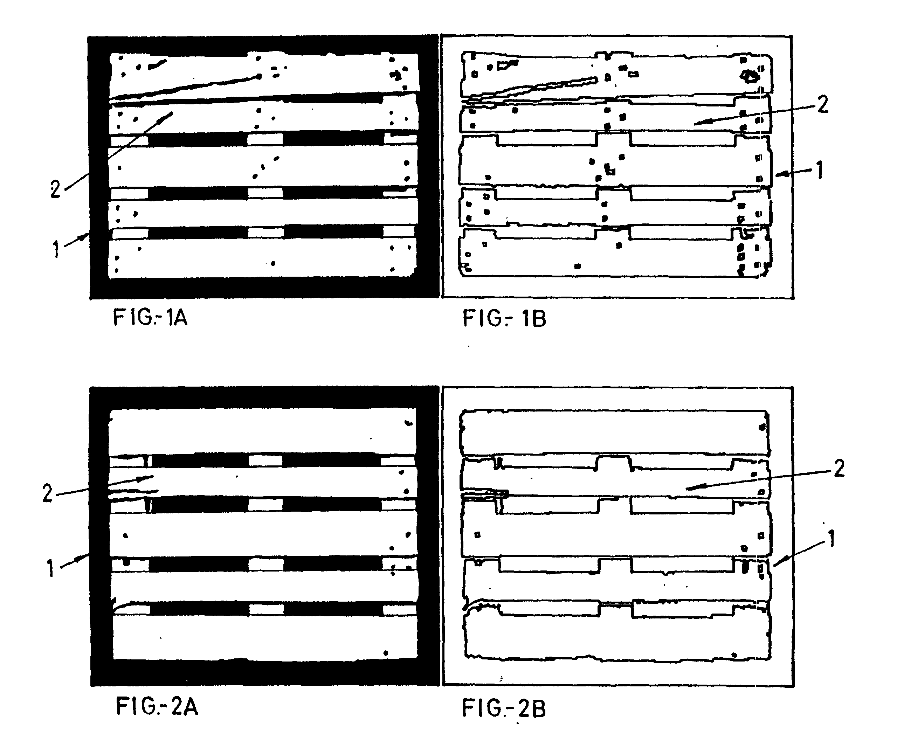

- Figure 1A shows a highlighted original image of a pallet which is the subject of an examination;
- Figure 1B shows the extraction of the outline of the pallet in Figure 1A;
- Figure 2A shows a highlighted original image of a second pallet;
- Figure 2B shows the extraction of the outline of the pallet in Figure 2A; and
- Figure 3 shows the image of the pallet picked up in Figure 1A, which reveals the segmentation of the elements, the maxima of the vertical graph showing the beginning and end of each plank; and
- Figure 4 shows a view in lateral section of the system which is the subject of the invention.

With reference to the figures, once the outline of the pallet (1) has been obtained, the next step is the segmentation of each plank (2), since the processing for identifying the defects is carried out individually for each element making up the pallet. Segmentation consists basically in individualizing the elements of the image, for example distinguishing each one of the five upper planks (2) of the pallet. In this processing, the algorithm used offers excellent results, virtually 100% of the samples used being segmented and the response time being very rapid.

After the segmentation of each element, the next step is the detection and analysis of defects. This processing consists in checking the surface of each plank (2), looking for possible defects. Once a possible defect has been detected, it is compared with a knowledge base which confirms whether or not the candidate is a critical defect. At this point, account is taken of the error specifications given by the user, which are dynamic and may have parameters applied to them, i.e. it is possible to modify the precision employed in recognizing defects, this being an essential aspect if we wish to have various quality criteria according to client requirements.

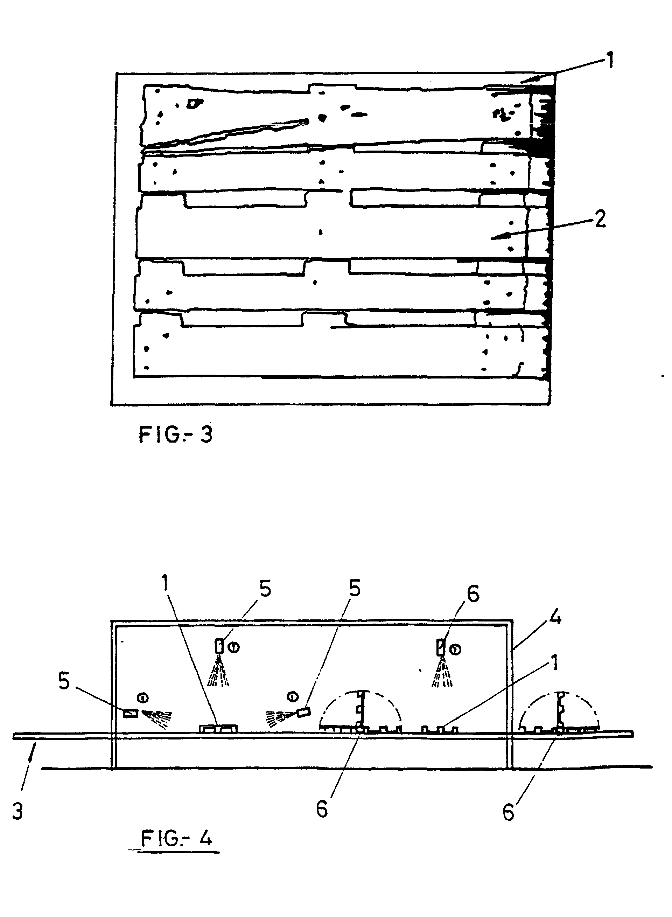

With reference to Figure 4, this shows a lateral view of the system for the automatic recognition and categorization of defects in pallets, and it must be understood that this is a preferred embodiment of the invention but in no way limits it. The system comprises an automatic belt of transport chains (3) which passes through a chamber (4) provided with an illumination system with a set of eight non-interlinked video cameras (5) with their respective optics and a predetermined distance between them. Two turning-over devices (6) are also provided on the conveyor belt, their function being to turn the pallet (1) over so that it is possible to inspect its other side. Once the pallet has been completely inspected, the second turning-over device (6) rotates the pallet (1) back to its normal position.

Specifically, the system which is the subject of the invention will carry out the following automatic measurements of the pallets or similar elements:
- the eight external dimensions of the pallet, of its upper or lower part;
- the width of the spaces, which will be measured along the entire pallet. Therefore, two measurements are carried out for each gap between studs, making it possible to obtain six measurements per space and twelve measurements in total;
- the height of the said spaces, which height will be measured on the inner ridges of the six external studs, therefore eight measurements in total; and
- the height of the apertures which will be measured on the inner ridges of the studs corresponding to the aperture, therefore eight measurements in total. Ultimately, the system will have to provide thirty measurements for each pallet. It should be pointed out that the maximum error in the measurements will be set, in the worst of cases, at between ± 5 mm with respect to the actual value.

It is very important to stress the process which has been used for categorizing the defects and which, as we have seen, consists of two stages or steps: (a) detection of the defects, and (b) categorization of the defects.

The first stage is responsible for detecting all the possible defects which may appear in an individual element of the pallet under study. It is vital that, at this stage, no type of defect should "escape". Next, each defect detected is specifically analysed to verify whether it is or is not a defect which has been catalogued. This specific analysis is determined, as indicated previously, by the user's specifications, i.e. these are defect specifications which may be defined externally, according to the types of defects it is desired to recognize.

In short, with the first stage, all the possible defects of a pallet are detected and, with the second stage, only those defects which are actually required are recognized or categorized.

Lastly, the system reveals the defects found by means of a "red" identifier which is located just above the defect and a message which indicates whether the element in question is or is not in a satisfactory condition.

The analysis of results obtained is based on a set of digitized images of pallets stored in files. The prototype categorizes defects appearing in the following elements of the pallet:
I. Planks (external and intermediate) on the surface;
II. Studs;
III. Runners.

The system makes it possible directly to read the files with the stored pallet images and directly to capture in real time any pallet to be categorized.

The results obtained with the sample set of pallets are shown in the following table:

**TABLE**

| ANALYSIS OF RESULTS | | |
|---|---|---|
| | Inspection Time | Success Rate |
| Surface planks | 2.9 sec | 100% |
| Central stud | 1.2 sec | 100% |
| Runners | 1.7 sec | 100% |

The above results deserve some commentary: the success percentage was calculated on the number of defects detected. Overall, in all the sample pallets used, all the existing defects are detected, including defects such as knots in the wood, holes and blemishes. Since the set of defects is limited to the three types of defects already indicated, in the second stage the system (by virtue of the focused approach introduced, which specifies the final defects to be categorized) categorizes only those defects, amongst all the defects previously detected, which correspond to the three types of defects already indicated.

The times achieved for categorization are essentially low, by virtue of highly refined debugging of the categorization programs. Thus, the above table shows that the maximum categorization time for each pallet image or shot does not exceed 3 seconds.

Naturally, the final time for categorizing a pallet will depend on the number of images or shots to be taken for each pallet. In a first approximation, it was estimated that around 8 shots per pallet would be required: front, rear, two sides and several additional shots from various angles. Since these shots may be taken independently of one another, the parallel running of the processing for categorizing each shot or image makes it possible for the total time for categorizing a pallet to be equal to the time for categorizing the slowest shot.

In addition, the use of a successive refining structure reduces the average pallet-categorization time. This idea consists basically in carrying out the entire defect-identification processing only on those pallets which are defective. It is not necessary to carry out the entire processing on those which are in satisfactory condition. To this end, an initial "approximate" identification indicates whether the pallet which is the subject of the identification is a candidate which will have some defect or other. If this is the case, the next step is a "finer" identification which makes it possible to detect the possible defect. If this is not the case, the pallet is identified as being "in a satisfactory condition" and the process moves on to the next pallet. In this way, not all the pallets are subjected to the complete processing, only those which are defective.

Furthermore, if the defect-detection requirements are relaxed, which may be necessary so that the number of defective pallets needing repair does not increase excessively, i.e. if less strict defect specifications are being employed, the categorization time would also drop in proportion. It is therefore appropriate to emphasize the importance of it being possible to apply parameters to the system as far as the specifications for the defects to be detected are concerned.

This application of parameters makes it possible easily to adapt the system to all types of pallets, manually or automatically choosing the set of pallets to be examined. The application of parameters also makes it possible to define various quality standards according to the criteria required by each client, as a function of the final quality of the pallet to be received by each client. This affects inspection-time performance since, if a quality standard is established which is stricter than another, the recognition time will increase in proportion.

### ADVANTAGES OF USING AN AUTOMATIC RECOGNITION SYSTEM

One of the objectives it is aimed to achieve with the installation of an automatic categorization system is undoubtedly the increase in product quality. There are several reasons which support the attainment of this objective:
- The categorization criteria are objectives: the manual recognition processing leaves the categorization decision to the judgement of the operator inspecting the pallet. This judgement may vary between two operators or even in one and the same operator, depending on various factors such as the lack of lighting, fatigue, concentration, etc. An automatic categorization system always has the same criteria.
- Parameters can be applied to the categorization criteria: this feature makes it possible to establish various quality standards, according to client requirements, thereby optimizing not only the categorization time but also the quality of the pallets received by clients. Some of the variables to which parameters may be applied are: a) the measurements of the various models, b) the criteria for categorizing defects, using the knowledge base containing information on various quality standards.
- Continuous operation: once installed, these systems are able to operate 24 hours a day, since external conditions do not change. The number of pallets processed per day would therefore increase considerably.
- Statistical analysis and monitoring of the pallets: automatic recognition of defects makes it possible to control the pallet cycle. Once the pallet has been categorized, it is possible to add a bar code specifying the type of defect it contains and its location. Therefore, on arrival at the repair shop, it is unnecessary to inspect it again - it is simply a matter of reading the code and then repairing the defect. Moreover, the code could contain a record of the date and place of the most recent inspection, which could therefore make it possible to control the life cycle of the pallets, clients who damage the material most, consignments containing a characteristic defect, etc.
- Quality control immediately after manufacture: the system is implicitly measuring the dimensions of each pallet. Inspection of the measurements is an even more rapid processing operation than the detection of defects. This can be used directly after the pallets come off the assembly line and those which do not have the correct measurements (with the required approximation) may be rejected. In this way, it is possible to certify the quality of the pallet in terms of measurements and absence of defects.

### CONCLUSIONS

I. An analysis was made of the viability conditions for a subsequent project for automatic categorization of a series of defects, the conclusion arrived at being that said global categorization is possible with the algorithms developed in this viability study.
II. A system has been constructed which is capable of recognizing, in real time, the subset of defects selected from the total set of defects, this subset having been used to evaluate the system's performance with a set of defective pallets. The average recognition time is under 3 seconds. However, account must be taken of the fact that several images have to be taken for each pallet. This does not mean that the time for inspecting the complete pallet will increase, since the parallel running of algorithms makes it possible to opt for a multiprocessor architecture.
III. The application of parameters stands out as one of the principal advantages of the system, it being possible to move on rapidly from one model to another or to specify another quality standard.

## Claims

1. Process for the automatic recognition and categorization of defects in pallets or similar elements, wherein the pallet (1) to be analysed is indirectly illuminated against a dark background and the image of same is captured, digitized and sent to a computer, **characterized by** comprising the steps of:
- bringing the pallet (1) arranged in its normal position into a chamber (4) provided with an illumination system with a set of non-interlinked video cameras (5) having respective optics and a predetermined distance between them;
- taking with the video cameras (5) a plurality of images from one side of the pallet (1) and then, after turning it over, from the other side of same, so as to determine the outline of the pallet, to obtain the external dimensions of same, the width and height of the spaces between its studs and the height of the apertures of the pallet, and to pinpoint the defects, the so captured images being digitized and sent to a computer for further processing;
- removing the pallet (1) from the chamber (4) and turning it over again to bring the same into its normal position;
- segmenting each one of the elements of the pallet (1) contained in the captured images, namely its planks (2), studs and runners, so as to individualize these elements in those images;
- detecting and analysing with the aid of the computer the defect or defects found in each one of the segmented elements by taking into account the error specifications that have been catalogued.

2. Process according to Claim 1, **characterized in that** detection is carried out on all the possible defects of each one of the elements of the pallet, a specific analysis subsequently being carried out on each defect detected in order to determine whether this is a catalogued defect.

3. Process according to Claims 1 and 2, **characterized in that** the analysis of the results obtained is based on a set of digitized images of the pallets, these images being stored in computer files.

4. Process according to Claim 1, **characterized in that** the detection and the analysis of the defects is carried out with dynamic error specifications to which parameters can be applied, with the aim of obtaining various quality criteria.

5. Process according to Claim 1, **characterized in that** the determination of the outline of the pallet involves an operation of highlighting and enhancing the original image of the pallet and an automatic thresholding of the histogram of the highlighted image.

6. System for the automatic recognition and categorization of defects in pallets or similar elements, which operates using the process according to claims 1 to 5 and which comprises means for illuminating the pallet (1) to be analyzed against a dark background, capturing its image, digitizing it and sending it to a computer, **characterized by** further comprising:
- a chamber (4) provided with an illumination system and a set of non-interlinked video cameras (5) having respective optics and located at a predetermined mutual distance, the chamber (4) being adapted to receive pallets (1) fed through an automatic belt of transport chains (3) and arranged in their normal position so that the video cameras (5) can capture a plurality of images of the pallets (1) in that position;
- a first device (6) for turning the pallets over, arranged inside the chamber (4), so that the video cameras (5) can capture another plurality of images of the pallets (1) in the overturned position, the video images captured in both positions of the pallets (1) being digitized with the aid of a digitizing card before sending same to a computer for further processing; and
- a second device (6), located outside the chamber (4), for turning the pallets (1) over again to bring them into their normal position.

7. System according to Claim 6, **characterized in that** the computer specifically analyses the defects found, verifying whether a catalogued defect is involved, revealing by means of an identifier the defect found and indicating the condition of the element of the pallet.

8. System according to Claim 6, **characterized in that** the computer includes a series of files with the digitized images of the pallets.

9. System according to Claims 6 to 8, **characterized in that** it is possible to apply parameters thereto.

## Patentansprüche

1. Verfahren zum automatischen Erkennen und Kategorisieren von Defekten in Paletten oder ähnlichen Elementen, wobei die zu analysierende Palette (1) gegen einen dunklen Hintergrund indirekt beleuchtet und ein Bild der Palette aufgenommen, digitalisiert und an einen Computer übertragen wird, **dadurch gekennzeichnet, daß** das Verfahren die Schritte aufweist:
Transportieren der Palette (1) in ihrer normalen Position in eine Kammer (4), in der ein Beleuchtungssystem mit einem Satz nicht miteinander verbundener oder verknüpfter Videokameras (5) bereitgestellt wird, wobei die Videokameras jeweilige Optiken aufweisen und in einem vorgegebenen Abstand voneinander angeordnet sind;
Aufnehmen mehrerer Bilder von einer Seite der Palette (1) durch die Videokameras (5) und anschließend, nachdem die Palette umgedreht wurde, von der anderen Seite der Palette, um den Umriß und damit die Außenabmessungen der Palette, die Breite und die Höhe der Zwischenräume zwischen ihren Klötzen oder Ansätzen sowie die Höhe der Palettenöffnungen zu bestimmen und Defekte zu lokalisieren, wobei die aufgenommenen Bilder digitalisiert und zur Weiterverarbeitung an einen Computer übertragen werden;
Entfernen der Palette (1) aus der Kammer (4) und erneutes Umdrehen der Palette, um die Palette in ihre normale Position zu bringen;
Segmentieren jedes der in den aufgenommenen Bildern enthaltenen Elemente der Palette (1), d.h. ihrer Deckbretter oder Planken (2), ihrer Klötze oder Ansätze und ihrer Bodenbretter oder Kufen, um diese Elemente in den Bildern zu individualisieren; und
Erfassen und Analysieren des Defekts oder der Defekte, die in jedem der segmentierten Elemente gefunden wurden, mit Hilfe des Computers unter Berücksichtigung katalogisierter Fehlerspezifikationen.

2. Verfahren nach Anspruch 1, **dadurch gekennzeichnet, daß** die Erfassung bezüglich allen möglichen Defekten jedes der Elemente der Palette ausgeführt wird und anschließend eine spezifische Analyse an jedem erfaßten Defekt ausgeführt wird, um zu bestimmen, ob dieser ein katalogisierter Defekt ist.

3. Verfahren nach Anspruch 1 oder 2, **dadurch gekennzeichnet, daß** die Analyse der erhaltenen Ergebnisse auf einem Satz digitalisierter Bilder der Paletten basiert, wobei diese Bilder in Computerdateien gespeichert sind.

4. Verfahren nach Anspruch 1, **dadurch gekennzeichnet, daß** die Erfassung und die Analyse der Defekte mit dynamischen Fehlerspezifikationen ausgeführt wird, auf die Parameter angewendet werden können, um verschiedene Qualitätskriterien zu erhalten.

5. Verfahren nach Anspruch 1, **dadurch gekennzeichnet, daß** die Bestimmung des Umrisses der Palette einen Schritt zum hervorgehobenen Darstellen und Vergrößern des Originalbildes der Palette und zum automatischen Bestimmen der Schwellenwerte des Histogramms des hervorgehoben dargestellten Bildes aufweist.

6. System zum automatischen Erkennen und Kategorisieren von Defekten in Paletten oder ähnlichen Elementen, wobei das System unter Verwendung des Verfahrens nach einem der Ansprüche 1 bis 5 betrieben wird und eine Einrichtung zum Beleuchten der zu analysierenden Palette (1) gegen einen dunklen Hintergrund, zum Aufnehmen eines Bildes der Palette, Digitalisieren des Bildes und Übertragen des Bildes an einen Computer aufweist, **dadurch gekennzeichnet, daß** das System ferner aufweist:
eine Kammer (4), die ein Beleuchtungssystem und einen Satz von Videokameras (5) mit jeweiligen Optiken aufweist, wobei die Videokameras nicht miteinander verbunden oder verknüpft und in einem vorgegebenen wechselseitigen Abstand voneinander angeordnet sind, wobei die Kammer (4) dazu geeignet ist, Paletten (1) aufzunehmen, die über ein automatisches Band von Transportketten (3) zugeführt und in ihrer normalen Position angeordnet sind, so daß die Videokameras (5) mehrere Bilder der Paletten (1) in dieser Position aufnehmen können;
eine in der Kammer (4) angeordnete erste Vorrichtung (6) zum Umdrehen der Paletten, so daß die Videokameras (5) eine andere Vielzahl von Bildern der Paletten (1) in ihrer umgedrehten Position aufnehmen können, wobei die in beiden Positionen der Paletten (1) aufgenommenen Videobilder mit Hilfe einer Digitalisierungskarte digitalisiert werden, bevor sie zur Weiterverarbeitung an einen Computer übertragen werden; und
eine außerhalb der Kammer (4) angeordnete zweite Vorrichtung (6) zum erneuten Umdrehen der Paletten (1), um sie in ihre normale Position zu bringen.

7. System nach Anspruch 6, **dadurch gekennzeichnet, daß** der Computer die gefundenen Defekte spezifisch analysiert, verifiziert, ob ein katalogisierter Defekt vorhanden ist, den gefundenen Defekt mit Hilfe einer Identifikationseinrichtung kennzeichnet und den Zustand des Elements der Palette anzeigt.

8. System nach Anspruch 6, **dadurch gekennzeichnet, daß** der Computer eine Serie von Dateien mit den digitalisierten Bildern der Paletten aufweist.

9. System nach einem der Ansprüche 6 bis 8, **dadurch gekennzeichnet, daß** Parameter auf das System angewendet werden können.

## Revendications

1. Procédé de reconnaissance et de classification automatiques des défauts dans les palettes ou éléments similaires, dans lequel la palette (1) qui doit être analysée est éclairée indirectement contre un arrière-plan sombre et l'image de celle-ci est capturée, numérisée et envoyée dans un ordinateur, **caractérisé en ce qu'**il comprend les étapes consistant à:
- amener la palette (1) agencée dans sa position normale dans une chambre (4) munie d'un système d'éclairage avec un ensemble de caméras vidéo (5) non reliées entre elles ayant des objectifs respectifs et une distance prédéterminée entre elles;
- prendre, grâce aux caméras vidéo (5), une pluralité d'images d'un côté de la palette (1), puis, après avoir retourné celle-ci, de l'autre côté de celle-ci, de façon à déterminer le contour de la palette, afin d'obtenir ses dimensions extérieures, la largeur et la hauteur des espaces qui séparent ses montants et la hauteur des ouvertures de la palette, et de souligner les défauts, les images ainsi capturées étant numérisées et envoyées dans un ordinateur pour un traitement ultérieur;
- enlever la palette (1) de la chambre (4) et la retourner à nouveau pour amener celle-ci dans sa position normale;
- segmenter chacun des éléments de la palette (1) contenus dans les images capturées, en particulier ses planches (2), ses montants et ses entretoises, de façon à séparer ces éléments sur lesdites images;
- détecter et analyser, à l'aide de l'ordinateur, le ou les défaut(s) découvert(s) dans chacun des éléments segmentés en prenant en compte les erreurs de spécifications qui ont été inventoriées.

2. Procédé selon la revendication 1, **caractérisé en ce que** la détection est effectuée sur tous les défauts possibles de chacun des éléments de la palette, une analyse spécifique étant effectuée ultérieurement sur chaque défaut détecté afin de déterminer s'il s'agit ou non d'un défaut inventorié.

3. Procédé selon les revendications 1 et 2, **caractérisé en ce que** l'analyse des résultats obtenus est basée sur un ensemble d'images numérisées des palettes, ces images étant stockées dans des fichiers informatiques.

4. Procédé selon la revendication 1, **caractérisé en ce que** la détection et l'analyse des défauts est effectuée avec des spécifications d'erreur dynamique, auxquelles des paramètres peuvent être appliqués, dans le but d'atteindre différents critères de qualité.

5. Procédé selon la revendication 1, **caractérisé en ce que** la détermination du contour de la palette implique une opération de mise en surbrillance et de renforcement de l'image originale de la palette et un seuillage automatique de l'histogramme de l'image mise en surbrillance.

6. Système de reconnaissance et de classification automatiques des défauts dans les palettes ou les éléments similaires, qui fonctionne en utilisant le procédé selon les revendications 1 à 5, et qui comprend des moyens pour éclairer la palette (1) qui doit être analysée, contre un arrière-plan sombre, à capturer son image, à numériser celle-ci et à l'envoyer dans un ordinateur, **caractérisé en ce qu'**il comprend en outre:
- une chambre (4) munie d'un système d'éclairage et d'un jeu de caméras vidéo (5) non reliées entre elles, ayant des objectifs respectifs et étant situées à une distance prédéterminée l'une de l'autre, la chambre (4) étant conçue pour recevoir des palettes (1) amenées par l'intermédiaire d'une bande automatique de chaînes transporteuses (3) et agencées dans leur position normale, de telle sorte que les caméras vidéo (5) puissent capturer une pluralité d'images des palettes (1) dans cette position;
- un premier dispositif (6) permettant de retourner les palettes, agencé à l'intérieur de la chambre (4), de telle sorte que les caméras vidéo (5) puissent capturer une autre pluralité d'images des palettes (1) dans la position retournée, les images vidéo capturées dans les deux positions des palettes (1) étant numérisées à l'aide d'une carte de numérisation avant qu'elles soient envoyées dans un ordinateur pour un traitement ultérieur; et
- un second dispositif (6), situé à l'extérieur de la chambre (4), afin de retourner à nouveau les palettes (1) afin de les amener dans leur position normale.

7. Système selon la revendication 6, **caractérisé en ce que** l'ordinateur analyse spécifiquement les défauts découverts, en vérifiant si un défaut inventorié est impliqué ou non, en révélant, grâce à un identifiant, le défaut découvert et en indiquant l'état de l'élément de la palette.

8. Système selon la revendication 6, **caractérisé en ce que** l'ordinateur comporte une série de fichiers des images numérisées des palettes.

9. Système selon les revendications 6 à 8, **caractérisé en ce qu'**il est possible d'y appliquer des paramètres.
